(19) Europäisches Patentamt / European Patent Office / Office européen des brevets

(11) **EP 2 177 020 B1**

(12) **FASCICULE DE BREVET EUROPEEN**

(45) Date de publication et mention
de la délivrance du brevet:
**17.10.2012 Bulletin 2012/42**

(51) Int Cl.:
**H04N 5/33** *(2006.01)*    **H04N 5/365** *(2011.01)*

(21) Numéro de dépôt: **08786534.1**

(22) Date de dépôt: **28.07.2008**

(86) Numéro de dépôt international:
**PCT/EP2008/059893**

(87) Numéro de publication internationale:
**WO 2009/021833 (19.02.2009 Gazette 2009/08)**

(54) **PROCÉDÉ DE CORRECTION DE SENSIBILITÉ ET CAPTEUR D'IMAGE MATRICIEL POUR LA MISE EN OEUVRE DE CE PROCÉDÉ**

VERFAHREN ZUR EMPFINDLICHKEITSKORREKTUR UND MATRIXBILDSENSOR ZUR IMPLEMENTIERUNG DIESES VERFAHRENS

METHOD OF CORRECTING SENSITIVITY AND MATRIX IMAGE SENSOR FOR IMPLEMENTING THIS METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **10.08.2007 FR 0705824**

(43) Date de publication de la demande:
**21.04.2010 Bulletin 2010/16**

(73) Titulaire: **Commissariat à l'Énergie Atomique et aux Énergies Alternatives
75015 Paris (FR)**

(72) Inventeur: **CHAMMING'S, Gilles
F-38100 Grenoble (FR)**

(74) Mandataire: **Guérin, Michel
Marks & Clerk France
Conseils en Propriété Industrielle
Immeuble Visium
22, Avenue Aristide Briand
94117 Arcueil Cedex (FR)**

(56) Documents cités:
**EP-A- 1 601 185     GB-A- 2 296 147
US-A- 5 047 861     US-A- 5 756 999**

**EP 2 177 020 B1**

**Description**

L'invention concerne les capteurs d'image matriciels, et elle concerne plus particulièrement un procédé pour corriger le bruit spatial engendré par la dispersion des propriétés physiques des différents points sensibles élémentaires, ou pixels, de la matrice. Ce bruit spatial est particulièrement important dans le cas de capteurs d'image infrarouges, que ce soient des capteurs à éléments photovoltaïques, qui mesurent des courants engendrés par le rayonnement infrarouge, ou des capteurs à éléments bolométriques, qui mesurent une température résultant d'un échauffement produit par le rayonnement.

Le bruit spatial engendre une image parasite qui détériore l'image utile ou même la rend inexploitable : en supposant que la scène observée par le capteur est une image de luminance uniformément moyenne, le capteur fournit une image non-uniforme, ce qui est inacceptable si cette non-uniformité excède un certain degré ; de plus, l'image observée dépend du niveau de cette luminance uniforme, ce qui rend ce bruit encore plus gênant puisque la différence de comportement de deux pixels dépend de la luminance qu'ils reçoivent.

Le comportement des pixels diffère en effet d'un pixel à l'autre non seulement en ce qui concerne le niveau de signal produit pour un niveau de luminance de référence, mais aussi en ce qui concerne la pente de croissance de la courbe de réponse du pixel en fonction de la luminance.

Pour réduire au minimum le bruit spatial ainsi engendré dans un capteur matriciel, on a déjà proposé de mesurer les niveaux de signaux de sortie des différents pixels pour une image uniforme de luminance donnée et de décaler individuellement le niveau de signal de chaque pixel pour que tous les pixels soient ramenés à une même référence (correction au premier ordre). On a également proposé de relever les niveaux pour deux niveaux de luminance uniforme différents, afin de corriger non seulement le décalage de niveau mais aussi la pente de variation (correction au deuxième ordre).

Les publications de brevet US-A- 5 047 861 et GB -A-2 296 147 décrivent ce type de correction.

Pour corriger à la fois le niveau et la pente, après avoir mesuré les signaux issus de chaque pixel pour deux luminances uniformes différentes, on peut par exemple procéder de la manière suivante :

- dans la première étape, on effectue une correction qui ramène le niveau du signal à une même valeur commune à tous les pixels pour l'un des niveaux d'éclairement uniforme, valeur qu'on peut considérer comme une valeur de référence ;
- dans la deuxième étape, après avoir décalé le niveau de signal de chaque pixel d'une valeur propre à ce pixel, on effectue une correction de gain pour que la pente de variation autour de la valeur de référence du signal corrigé soit la même pour tous les pixels ; on calcule pour chaque pixel la différence entre les signaux corrigés obtenus pour les deux luminances, et on détermine pour chaque pixel un gain tel que cette différence multipliée par le gain soit égale à une valeur commune à tous les pixels ; on effectue ensuite pour chaque pixel une correction qui consiste à multiplier la différence entre le niveau de signal corrigé et la valeur de référence par le gain propre à ce pixel ; cela donne un signal doublement corrigé qu'on rajoute à la valeur de référence commune pour obtenir le signal définitif.

Ces méthodes nécessitent donc en pratique, pour la prise en compte de la dispersion de niveau et la prise en compte de la dispersion de gain un calibrage manuel à partir d'une ou deux images uniformes présentant des luminances de référence, ce qui est gênant ; par ailleurs, ce calibrage doit être refait si le bruit spatial dérive au cours du temps.

Il a aussi été proposé d'effectuer des calculs correctifs de chacun des points de l'image recueillie, à partir de l'observation d'un grand nombre d'images successives, en faisant l'hypothèse que la moyenne statistique et la variance statistique des niveaux de lumière reçus par un pixel est la même pour tous les pixels en raison de la diversité des images reçues au cours du temps. Ainsi, on calcule la moyenne des signaux reçus dans le temps pour chaque pixel et on effectue une correction du signal courant du pixel pour décaler le niveau courant d'une valeur correspondant à l'écart entre la moyenne détectée pour ce pixel et une valeur de référence de moyenne commune à tous les pixels. Ceci ramène le niveau moyen de tous les signaux à la même valeur de référence, cette valeur de référence étant issue d'une moyenne statistique et non de l'observation d'un écran de luminance uniforme de référence.

De même on calcule la variance pour chaque pixel sur un grand nombre d'images, cette variance représentant en quelque sorte une approximation de la pente de la courbe de variation du niveau de signal en fonction de la luminance, et on applique une correction de gain aux variations de signal courant, la correction étant l'écart entre la variance calculée et une variance de référence commune à tous les pixels. La variance de référence peut être une moyenne des variances de tous les pixels. Ceci ramène la pente de variation de chaque pixel à une même valeur de référence.

Cette solution est très intéressante puisqu'elle ne nécessite aucun calibrage à partir d'écrans de référence.

Mais ces calculs sont très lourds puisqu'ils nécessitent de recueillir un grand nombre d'images, de les stocker toutes, de faire des calculs de moyenne pour chaque pixel sur ce grand nombre d'images, ainsi que des calculs de variance sur chaque pixel. En pratique, cela ne peut être effectué que par un calculateur puissant, sur des séries d'images préenregistrées. On ne pourrait pas recueillir et traiter directement l'image dans la caméra de prise de vue. Par conséquent, bien que cette solution soit utilisable en théorie pour le traitement d'images en différé, elle n'est pas du tout applicable pour une prise d'image instantanée.

Dans un certain nombre de capteurs d'image, la dispersion des niveaux de signal pour une luminance moyenne donnée s'avère beaucoup plus forte que la dispersion due à la variation de pente sur toute l'échelle de luminances possibles. Typiquement, si l'amplitude des variations de signal dans la gamme de luminances utiles donne lieu à une dispersion de signal de pixel à pixel de l'ordre de un huitième de cette amplitude, la dispersion de l'amplitude moyenne du signal, de pixel à pixel, peut atteindre huit fois l'amplitude des variations dans la gamme utile. Ceci résulte d'ailleurs du fait que les variations de signal issu du pixel, dans la gamme de luminances qui peuvent être reçues, n'excèdent souvent pas 1 à 2 pourcent du niveau moyen du signal électrique fourni par le pixel. Il est donc particulièrement crucial dans ces capteurs de corriger la dispersion des niveaux de réponse.

Cependant, on s'est aperçu que pour un certain nombre de capteurs d'image qui ont une dispersion de niveaux très importante, la dispersion des pentes de variations d'un pixel à l'autre est corrélée avec la dispersion des niveaux moyens de signal pour une luminance donnée : en pratique, la pente de variation du signal de sortie en fonction de la luminance est plus forte si le niveau pour une luminance moyenne est plus fort. Ceci résulte de la construction physique de ces capteurs d'image. C'est le cas en particulier pour les capteurs infrarouge de type bolométrique.

On propose selon l'invention de simplifier considérablement le processus de calibration du capteur d'image, en considérant a priori que les courbes de variation du niveau de signal en fonction de la luminance, dans une gamme utile de luminances, peuvent être représentées approximativement par des droites passant par un même point d'origine pour tous les pixels, de sorte que le signal électrique (tension ou courant ou quantité de charges) de sortie d'un pixel $P_i$ peut s'écrire $X_i(L) = K_0 + G_i.(L-L_0)$ ; L un paramètre lié à l'éclairement reçu, et on désignera ce paramètre par "luminance" dans la suite pour simplifier ; $X_i(L)$ est la valeur de signal fourni par le pixel $P_i$ pour une luminance L ; $L_0$ est la luminance au point où se croisent toutes les droites, $K_0$ est la valeur de signal électrique issu de ce pixel pour la luminance $L_0$, et $G_i$ est la pente de variation du signal en fonction de la luminance pour le pixel $P_i$.

Dès lors, selon l'invention, on propose un procédé de correction du signal électrique issu de chaque pixel, rapporté à une référence représentée par le point $(K_0, L_0)$, en le multipliant simplement par un coefficient représentant le rapport entre la pente $G_i$ correspondant à ce pixel et une pente de référence $G_0$ qui est la même pour tous les pixels. Avec cette simple application d'un coefficient multiplicatif, mais en utilisant un signal référencé par rapport à une origine commune à tous les pixels, on obtient une correction de dispersion très efficace sans être obligé d'utiliser une double correction additive et multiplicative.

La pente de référence peut être une moyenne des pentes observées sur tous les pixels, ou bien une pente arbitraire souhaitée.

Plus précisément, le procédé selon l'invention est un procédé de correction de sensibilité pour un capteur d'image matriciel du type dans lequel les courbes de réponse des différents pixels en fonction de la luminance L peuvent être représentées par des droites passant toutes sensiblement par un même point d'abscisse $L_0$ et d'ordonnée $X(L_0) = K_0$, comprenant les étapes suivantes :

- on établit pixel par pixel un signal $X_i(L)$ correspondant à l'éclairement d'un pixel $P_i$ par une luminance L ;
- on définit ledit point ko, la valeur $K_0$ étant choisie telle que pour une luminance $L_0$ donnée les pixels fournissent tous un signal $X_i(L_0)$ sensiblement égal à $K_0$ ; images variables pendant un temps suffisamment long (typiquement plusieurs minutes, mais cette durée dépend de la plus ou moins grande variété d'images vues par le capteur). Elle repose aussi sur le fait qu'en modifiant légèrement en positif ou en négatif le contenu du registre en fonction de la luminance reçue, ce contenu va progressivement se stabiliser (avec une constante de temps d'autant plus grande que p est grand) autour d'une valeur telle que la moyenne des signaux corrigés sera nulle pour ce pixel comme pour les autres.
- et on établit un signal $X^*_i(L)$ corrigé en appliquant au signal $X_i(L)-K_0$ un coefficient correcteur multiplicatif spécifique au pixel considéré et en ajoutant la référence fixe $K_0$ au résultat de la multiplication, le coefficient correcteur étant déterminé à partir du signal $X_i(Lr)$ fourni par le pixel $P_i$ pour une luminance de référence déterminée Lr qui est la même pour tous les pixels.

Le coefficient correcteur multiplicatif est de préférence égal à $[X_0(Lr) - K_0] / [X_i(Lr) - K_0]$, où $X_0(Lr)$ est une valeur désirée pour le signal corrigé issu d'un pixel lorsqu'il est éclairé par la luminance de référence Lr.

Le signal $X_i(L)$ est de préférence l'intégrale temporelle d'une valeur de courant électrique d'autant plus importante que la luminance est plus grande. La durée d'intégration est renouvelée à chaque cycle d'intégration au fur et à mesure de la prise d'images successives. Le coefficient correcteur multiplicatif spécifique à chaque pixel est alors appliqué sous forme d'une durée d'intégration de ce courant différente d'un pixel à l'autre.

Dans un mode de réalisation, chaque pixel du capteur matriciel comporte un élément sensible à la lumière fournissant un courant variable en fonction de l'éclairement, un élément de conversion courant-fréquence produisant des impulsions à une fréquence variable en fonction du courant, et un compteur d'impulsions actionné pendant ladite durée d'intégration, le coefficient correcteur multiplicatif étant le rapport entre cette durée et une durée fixe $T_0$.

La durée d'intégration variable spécifique à un pixel peut être définie par une méthode récursive à partir d'un registre spécifique au pixel, le contenu de ce registre étant incrémenté d'une valeur $X^*_i(L) / 2^p$ à chaque cycle d'intégration, p étant un nombre entier au moins égal à 8 et de préférence choisi entre 12 et 14, la valeur corrigée $X^*_i(L)$ pouvant prendre des valeurs positives ou négatives autour d'une valeur nulle correspondant à la moyenne des luminances reçues par les pixels sur une longue période de temps. Cette méthode récursive repose sur le fait que tous les pixels vont recevoir statistiquement une même luminance moyenne s'ils observent des

Le registre d'un pixel $P_i$ contient de préférence une valeur $dT_i$ servant à initialiser un compteur qui détermine une durée d'intégration par comptage à une fréquence fixe jusqu'à un contenu déterminé. La durée d'intégration est alors égale à une durée fixe ($T_0$) diminuée du contenu ($dT_i$) du registre.

D'une manière générale, le coefficient correcteur multiplicatif peut aussi être établi par calcul, quel que soit la constitution du pixel, dans une phase de calibrage pendant laquelle la matrice est éclairée par une source de lumière de luminance Lr uniforme pour tous les pixels. On mesure le signal $X_i(Lr)$ pour tous les pixels, et on calcule le coefficient multiplicatif qui convient pour ramener les courbes de réponse de tous les pixels à une même courbe de référence. Le calcul est de préférence fait en dehors de la matrice de pixels, et est transmis par un bus aux pixels (par exemple un bus qui vient remplir un registre de modulation de la durée d'intégration spécifique à chaque pixel).

L'invention s'applique aux capteurs d'image infrarouge de type bolométrique, mais aussi plus généralement à tout capteur d'image matricielle dont le principe de fonctionnement implique que tous les pixels ont des formes de courbe de réponse semblables les unes aux autres et passant sensiblement toutes par une origine commune à tous les pixels.

D'autres caractéristiques et avantages de l'invention apparaîtront à la lecture de la description détaillée qui suit et qui est faite en référence aux dessins annexés dans lesquels :

- la figure 1 représente des courbes de réponse linéaires de pixels différents d'une même matrice de pixels, dans une gamme de luminances utiles autour d'une valeur de luminance moyenne Lm ;
- la figure 2 représente les mêmes courbes, faisant apparaître un point de convergence d'abscisse $L_0$ et d'ordonnée ko de toutes ces courbes de réponse ;
- la figure 3 représente les mêmes courbes, ramenées à un axe d'ordonnée correspondant à la valeur de signal obtenue pour une luminance moyenne Lm et un pixel de référence $P_0$ ;
- la figure 4 représente des courbes de réponse similaires aux précédentes mais non-linéaires ;
- la figure 5 représente une structure de circuiterie numérique associée à un pixel, permettant d'établir un signal corrigé par un coefficient multiplicatif ;
- la figure 6 représente un circuit permettant d'établir récursivement le signal corrigé par incrémentation ou décrémentation progressive du contenu d'un registre en fonction du signal issu du pixel.

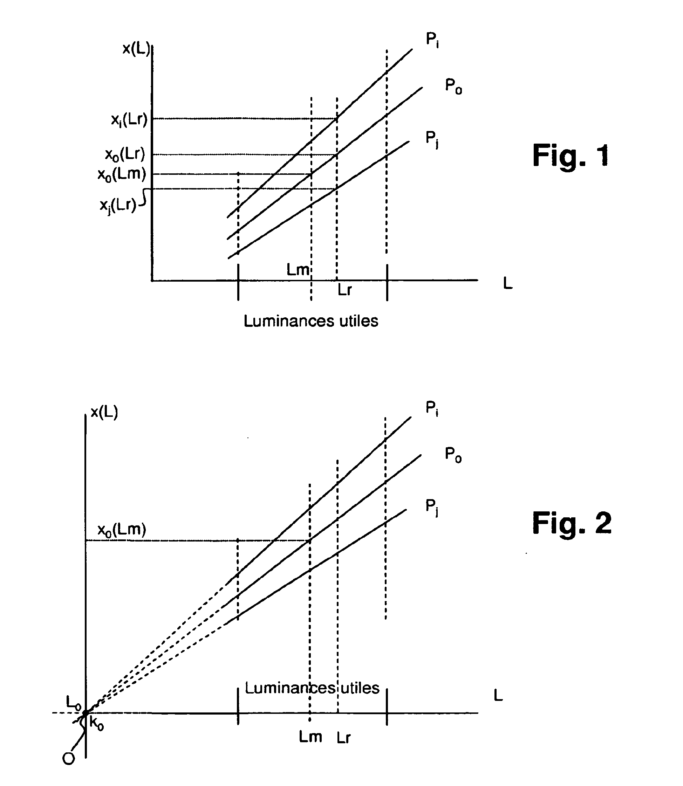

La figure 1 est un diagramme représentant schématiquement la dispersion des réponses individuelles des pixels d'un capteur matriciel exposés à une luminance variable L dans une gamme de luminances utiles compte-tenu de l'application envisagée. Comme indiqué précédemment, le paramètre L est désigné par le mot "luminance" mais il peut être différent de la luminance. Il représente en tous cas l'exposition plus ou moins importante d'un pixel à une lumière plus ou moins intense.

Les réponses de trois pixels sont représentées : un pixel $P_i$, un pixel $P_j$ et un pixel $P_0$. Le pixel $P_i$ est le plus sensible des trois, en ce sens qu'il fournit un signal électrique $x_i(L)$ qui est plus fort que les autres pour une luminance donnée : pour une luminance de référence Lr (qui pourrait d'ailleurs être une luminance moyenne Lm sensiblement au milieu de la gamme utile), il fournit un signal d'amplitude $x_i(Lr)$ plus élevé que les signaux fournis par les autres pour la même luminance de référence ; le pixel $P_i$ est le moins sensible des trois et fournit un signal $x_j(Lr)$ inférieur à $x_i(Lr)$ pour la même luminance Lr ; le pixel $P_0$ a une sensibilité intermédiaire, ni trop forte ni trop faible, qu'on peut prendre comme référence pour évaluer la sensibilité des autres pixels ; il fournit un signal $x_0(Lr)$ lorsqu'il est exposé à la luminance Lr.

Dans le cas de la figure 1, les réponses des différents pixels peuvent être considérées comme sensiblement linéaires autour de leur valeur moyenne ; on verra plus loin ce qui se passe si elles ne sont pas linéaires. Les pentes de ces réponses sont cependant différentes d'un pixel à l'autre, et c'est ce qui justifiait dans l'art antérieur d'établir une double correction pour ramener tous les pixels à une même courbe de réponse : correction d'abord additive pour abaisser d'une valeur $x_i(Lr) - x_0(Lr)$ le niveau du signal issu du pixel le plus sensible $P_i$ et pour remonter d'une valeur $x_0(Lr) - x_i(Lr)$ le niveau du signal issu du pixel le moins sensible $P_j$ ; puis correction multiplicative pour donner au pixel $P_i$ une pente de réponse plus faible lors des variations de luminance, et au pixel $P_j$ une pente plus forte ; les pentes sont ramenées à une valeur de référence qui peut être la pente du pixel de sensibilité moyenne $P_0$ ou plus généralement une pente de référence désirée.

Si le capteur est un capteur bolométrique, on peut remarquer qu'il y a une corrélation entre la différence des niveaux de réponse pour la luminance de référence, $x_i(Lr)$, $x_j(Lr)$, $x_0(Lr)$, et les pentes de réponse différentes d'un pixel à l'autre : le pixel $P_i$ considéré comme plus sensible parce qu'il fournit un signal $x_i(Lr)$ plus fort pour la luminance de référence Lr a aussi la pente de courbe de réponse la plus forte ; le pixel $P_j$, moins sensible, a la pente de courbe de réponse la plus faible.

Pour les capteurs infrarouges bolométriques mais aussi pour d'autres types de capteurs, tout se passe comme si les réponses des pixels individuels de la matrice étaient toutes des droites passant sensiblement par une même origine O.

La figure 2 représente les mêmes courbes de réponse, faisant apparaître ce point d'origine commun O. Cette origine commune s'explique le plus souvent par la construction même des pixels : on peut concevoir par exemple que les pixels ne fournissent véritablement aucun signal utile lorsqu'ils sont dans le noir complet, ou même qu'ils fournissent un courant de fuite rigoureusement identique pour tous lorsqu'ils sont dans le noir, etc.

En raison de cette origine commune des courbes de réponse, on comprend qu'on peut modifier la réponse d'un pixel $P_i$ ou $P_j$ et la ramener à la réponse du pixel de référence $P_0$ en multipliant simplement par un facteur correctif multiplicatif $FC_i$ ou $FC_j$ le signal issu du pixel $P_i$ ou $P_j$, pourvu qu'on prenne le point O (abscisse $L_0$, ordonnée $k_0$) comme origine des valeurs de signaux issus des pixels. Ainsi, le signal $x_i(L)$ fourni par le pixel $P_i$ pour une luminance L sera corrigé en multipliant $x_i(L)-k_0$ par un facteur de correction $FC_i = G_0/G_i$, où $G_0$ représente la pente de la réponse du pixel de référence et $G_i$ la pente de la réponse du pixel considéré ; de cette correction multiplicative on tirera un signal corrigé $x^*_i(L)$ tel que $x^*_i(L) - k_0 = [x_i(L) - k_0].G_0/G_i$, ou $x^*_i(L) = [x_i(L) - k_0].G_0/G_i + ko$

En pratique, on peut considérer, aussi bien en traitement analogique qu'en traitement numérique, que le signal issu des pixels est centré par rapport au signal issu du pixel de référence pour une luminance moyenne Lm. Autrement dit : chaque pixel peut fournir un signal électrique analogique ou numérique soit en positif soit en négatif autour d'une valeur zéro qui est la réponse d'un pixel de référence à la luminance moyenne (Lm). On peut donc changer de coordonnées de représentation de la réponse et considérer un axe d'ordonnée des réponses dont le zéro est cette réponse.

Par conséquent, dans ce qui suit on considérera non pas les signaux $x_i(L)$, lesquels sont référencés par rapport à des origines d'abscisse et d'ordonnée $L_0$ et ko, mais des signaux décalés $X_i(L)$ qui sont référencés par rapport au point d'abscisse Lm et d'ordonnée $x_0(Lm)$.

$$X_i(L) = x_i(L) - x_0(Lm).$$

De même, on définira une nouvelle valeur d'origine $K_0$ du point O par rapport à cette nouvelle référence :

$$K_0 = k_0 - x_0(Lm)$$

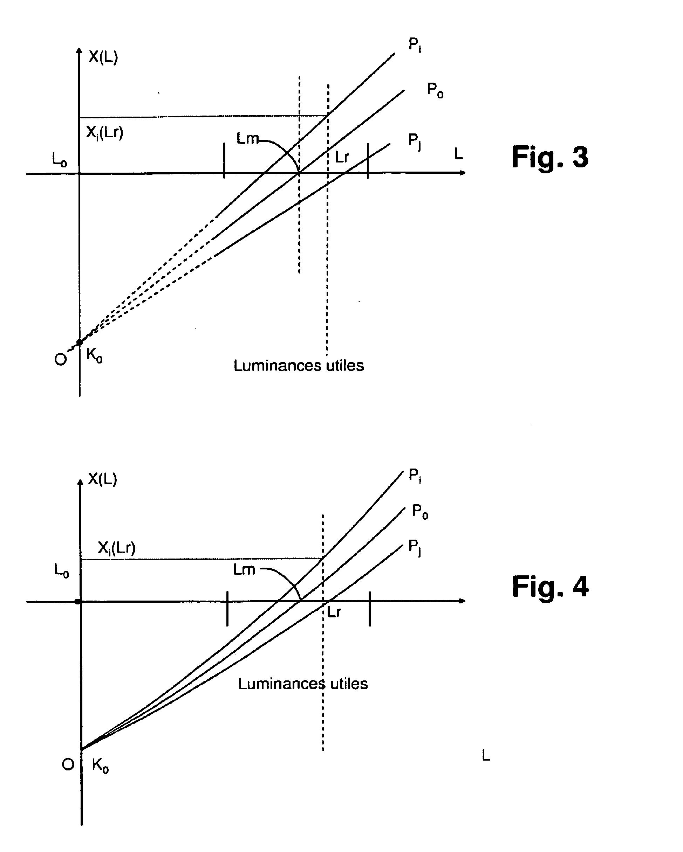

La figure 3 représente les signaux ainsi référencés par rapport à la réponse d'un pixel de référence $P_0$ à une luminance moyenne Lm.

De ces signaux décalés, on tirera des signaux corrigés $X^*_i(L)$ qui sont aussi référencés par rapport au point d'abscisse Lm et d'ordonnée $x(L) = x_0(Lm)$, ou $X(L) = 0$.

La correction à appliquer aux signaux $X_i(L)$ reste alors la même que précédemment, en utilisant la valeur $K_0$ au lieu de $k_0$ :

$$X^*_i(L) - K_0 = [X_i(L) - K_0].FC_i,$$

avec un facteur de correction $FC_i = G_0/G_i$

La figure 3 représente les variations de signaux X(L) par rapport à ces nouvelles références.

Le rapport des pentes $G_0/G_i$ est mesurable à partir de la connaissance de la réponse de chaque pixel (et du pixel de référence) pour la luminance de référence Lr.

En effet, la réponse du pixel $P_i$ à la luminance Lr est $X_i(Lr)$ telle que $X_i(Lr) - K_0 = G_i.(Lr - Lo)$ ; la réponse du pixel de référence $P_0$ à cette même luminance est $X_0(L)$ telle que $X_0(Lr) - K_0 = G_0.(Lr - Lo)$.

Le facteur de correction $FC_i = G_0/G_i$ est donc égal à $[X_0(Lr) - K_0]/[X_i(Lr) - K_0]$.

La détermination de ce rapport de gains suppose par conséquent la mesure de $X_i(Lr)$ et la connaissance de $K_0$, et le facteur de correction est $G_0/G_i = [X_0(Lr) - K_0] / [X_i(Lr) - K_0]$.

$K_0$ peut être connu du fait de la construction physique des pixels du capteur et des traitements de signaux qui interviennent entre le pixel proprement dit et le signal électrique de sortie X(L) considéré, que ce soit en analogique ou en numérique.

Si $K_0$ est inconnu, on peut également l'estimer, et éventuellement l'ajuster par approximations successives (ceci peut se faire par observation d'images prises par le capteur).

Le pixel de référence $P_0$ n'est pas un pixel physiquement présent sur le capteur : ce qui compte c'est la valeur $X_0(Lr)$ et on peut choisir une valeur $X_0(Lr)$ désirée qui est celle par rapport à laquelle on souhaite référencer tous les pixels de la matrice. Cette valeur $X_0(Lr)$ peut être obtenue aussi par mesure en calculant la moyenne des réponses de tous les pixels de la matrice éclairée par la luminance uniforme Lr et en prenant ensuite cette valeur comme zéro de référence de X(L). On verra que dans certains cas il n'est même pas nécessaire de calculer cette référence.

Ainsi, connaissant $K_0$ et le facteur de correction $FC_i$ déterminé pour chaque pixel, on peut remplacer systématiquement le signal électrique mesuré $X_i(L)$ issu d'un pixel $P_i$ par un signal corrigé $X^*_i(L) = K_0 + FC_i.[X_i(L) - K_0]$ où $FC_i$ est

$$FC_i = [X_0(Lr) - K_0] / [X_i(Lr) - K_0]$$

Il n'y a qu'une correction multiplicative en ce sens que les additions de $K_0$ sont des additions d'une quantité fixe qui ne varie pas de pixel à pixel. Seul le terme correcteur multiplicatif varie de pixel à pixel.

Le procédé selon l'invention comporte donc deux étapes principales :

- recherche des facteurs de correction $FC_i$ individuels des pixels, selon la formule ci-dessus, le terme $K_0$ étant estimé ou connu,
- multiplication des signaux de mesure individuels des pixels, référencés par rapport à la valeur $K_0$, par le facteur de correction $FC_i$ relatif à chaque pixel.

Dans le contexte habituel de la correction classique (additive et multiplicative) il faudrait utiliser un calculateur extérieur au capteur et même à la caméra de prise de vue. Il est possible de le faire ici aussi, mais on peut avantageusement utiliser un calcul interne au capteur ou à la caméra, en raison du fait que la correction multiplicative simple est plus facile à mettre en oeuvre qu'une correction double.

Si la multiplication est intégrée dans le capteur il peut être particulièrement avantageux de prévoir un circuit de calcul élémentaire associé à chaque pixel (intégré au pixel ou réalisé dans une matrice de correction associée à la matrice de pixels), ou bien de prévoir d'autres moyens réalisant au niveau de chaque pixel une opération équivalente à une multiplication par le facteur $FC_i$. Une opération équivalente à cette multiplication peut se faire même en analogique, par exemple en ajustant une tension ou un courant de polarisation dont la valeur agit sur la sensibilité du pixel. Le courant ou la tension est alors ajusté individuellement pour chaque pixel de manière à faire la correction désirée.

On notera qu'on a fait ci-dessus l'hypothèse simplificatrice que le signal de sortie du pixel varie linéairement avec la luminance. L'invention peut toutefois être mise en oeuvre même si des non-linéarités existent, pourvu qu'on puisse encore considérer que les courbes de réponse non-linéaires des différents pixels passent sensiblement par un point d'origine commune O et qu'on puisse passer d'une courbe à une autre par une simple multiplication du signal (référencé par rapport au point O) par un facteur multiplicatif dans la gamme de luminances considérées ; cela signifie que la non-linéarité est la même pour tous les pixels par construction, ce qui est normal puisque tous les pixels sont a priori réalisés de la même manière, seules les dispersions technologiques leur donnant des réponses différentes représentées par un facteur multiplicatif spécifique à chaque pixel. La figure 4 illustre des courbes de réponse non linéaires répondant à cette condition. On comprend qu'on peut alors raisonner comme pour les figures précédentes par une simple opération de multiplication du signal issu du pixel avec le même coefficient multiplicatif que celui qui a été donné plus haut.

Dans le cas où la mise en oeuvre de la correction multiplicative selon l'invention est faite en amont de la transmission du signal électrique du pixel à la sortie de la matrice (c'est-à-dire que la correction est intégrée à chaque pixel), on peut procéder de la manière suivante : on règle individuellement le temps d'exposition de chaque pixel a une durée qui varie d'un pixel à l'autre. Les pixels moins sensibles auront un temps d'exposition plus long (dans la limite du temps de pose usuel de 20 millisecondes pour un imageur classique), les pixels plus sensibles auront un temps d'exposition plus court. Un compteur individuel comptant des impulsions à une fréquence fixe peut être prévu à cet effet dans chaque pixel pour définir le temps de pose : le compteur sera associé à un registre d'initialisation qui lui impose un contenu prédéterminé au démarrage, le compteur comptant ensuite jusqu'au maximum de sa capacité, d'où il résulte que le temps de comptage pour un cycle d'intégration de charges donné varie d'un pixel à l'autre selon le contenu du registre d'initialisation ; la variation d'un pixel à l'autre représente la réduction de temps d'intégration nécessaire pour compenser les différences entre les sensibilités des pixels individuels. Le contenu du registre sera établi pixel par pixel en fonction du facteur multiplicatif déterminé qu'il faut appliquer à ce pixel pour le ramener au comportement d'un pixel de référence. Si le temps d'exposition maximum est $T_0$ et le contenu du registre est $dT_i$, le coefficient multiplicatif est en quelque sorte $(T_0-dT_i)/T_0$. Le pixel de référence dans ce cas est le pixel de sensibilité la plus faible, celui-ci ayant un temps d'exposition maximal $T_0$ et un contenu de registre $dT_i$ nul.

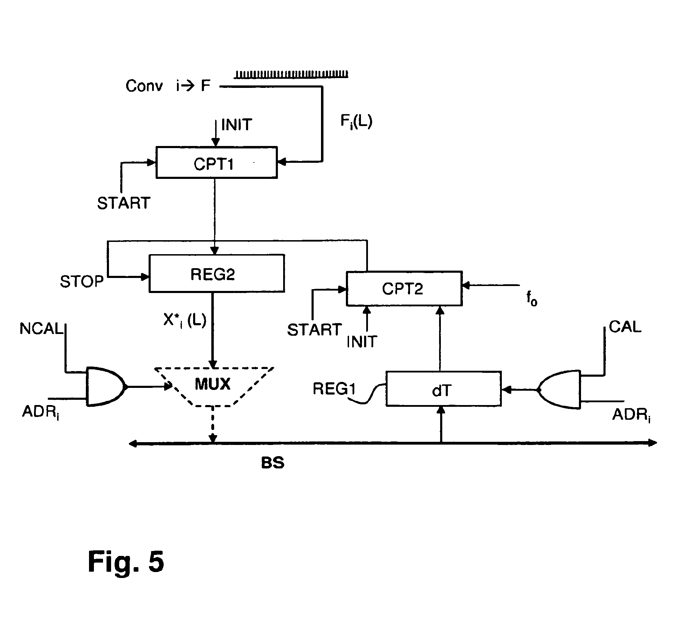

La figure 5 représente un exemple d'une telle architecture de circuit de correction multiplicative associé à un pixel $P_i$ de la matrice de prise d'image. Seule la partie numérique du pixel est représentée, la partie analogique ne l'est pas. On considère à titre d'exemple que le pixel comprend un détecteur bolométrique, non représenté, qui fournit un courant qui dépend de l'éclairement du pixel, et ce courant est converti en une fréquence $F_i$ par un convertisseur courant-fréquence non représenté. Ainsi, pour une luminance L reçue par le pixel $P_i$, des impulsions à fréquence $F_i(L)$ sont émises.

Ces impulsions sont transmises à un premier compteur numérique CPT1 qui compte d'autant plus vite que la fréquence $F_i(L)$ est plus élevée. Un deuxième compteur CPT2 reçoit des impulsions de comptage à fréquence fixe fo pour constituer une base de temps définissant le temps d'intégration de lumière à chaque cycle.

Les deux compteurs sont initialisés avant le début d'un cycle d'intégration, par un front d'un signal INIT : le premier compteur CPT1 est initialisé à zéro, mais le deuxième est initialisé à une valeur dT contenue dans un registre d'initialisation REG1. Les compteurs commencent à compter simultanément à partir d'une impulsion START de démarrage de cycle d'intégration. Le premier compteur compte à la fréquence $F_i(L)$; le deuxième compte à la fréquence fo.

Un deuxième registre REG2 reçoit le contenu du premier compteur et l'enregistre lorsqu'il reçoit une impulsion de fin de comptage STOP issue du deuxième compteur CPT2 lorsque celui-ci revient à zéro après avoir compté jusqu'à sa capacité maximale. Le contenu enregistré dans le registre REG2 au cours de ce cycle est d'autant plus grand que le premier compteur CPT1 a compté plus vite. Il dépend par conséquent de la fréquence de comptage $F_i(L)$, c'est-à-dire de la lumière reçue par le pixel.

Le contenu du registre REG2 est transmis, en fin de cycle d'intégration, à un bus de sortie BS, à travers un multiplexeur MUX commandé par un signal d'adressage. Le contenu est transmis lorsque l'adresse $ADR_i$ du pixel $P_i$ arrive par le bus d'adressage.

Le contenu $dT_i$ du registre REG1 permet de définir comme on l'a dit ci-dessus un paramètre variable en fonction de la sensibilité du pixel ; ce paramètre est plus précisément un temps d'exposition variable, servant à modifier le coefficient multiplicatif qu'il faut appliquer à un pixel pour ramener la sensibilité de ce pixel à une sensibilité égale à celle d'un pixel de référence. La valeur de $dT_i$ peut être nulle pour un pixel ayant la sensibilité la plus faible possible, le temps de pose est alors $T_0$, qui est le temps nécessaire pour que le compteur CPT2 compte de zéro jusqu'à sa capacité maximale à une fréquence de comptage fo. Si $dT_i$ n'est pas nul, le temps d'exposition est défini par $T_0 - dT_i$, et le coefficient multiplicatif est $(T_0 - dT_i)/T_0$

Le contenu $dT_i$ du registre REG1 est déterminé pixel par pixel par un calculateur qui reçoit les signaux issus de tous les pixels lors d'une opération de calibrage ; il est transmis au registre REG1 par le bus BS. L'opération de calibrage comprend l'illumination de tous les pixels par un écran de luminance uniforme Lr. Le calibrage peut être effectué soit une seule fois, soit plusieurs fois, par exemple à chaque démarrage de l'alimentation du capteur, ou éventuellement périodiquement. C'est pourquoi un signal CAL de calibrage peut être prévu pour autoriser la transmission d'une valeur $dT_i$ depuis le bus BS vers le registre REG1. Un signal complémentaire NCAL peut servir à valider la transmission vers le bus de sortie BS d'une valeur de signal de luminance en dehors des opérations de calibrage. Cette valeur de luminance est une valeur qui est intrinsèquement corrigée par le facteur multiplicatif $(T_0-dT_i)/T_0$. C'est donc la valeur corrigée $X^*_i(L)$ mentionnée précédemment.

Dans cet exemple, on a supposé que la fréquence $F_i$ établie à partir de l'éclairement d'un pixel est référencée par rapport à la valeur de $K_0$ expliquée précédemment, c'est-à-dire une valeur commune à tous les pixels, par exemple nulle pour une luminance $L_0$ nulle.

On comprend donc que dans cet exemple, le signal produit par un pixel est fondamentalement l'intégrale d'un courant pendant un temps $T_0$ et que le facteur de correction multiplicatif est obtenu par une modulation de la valeur de ce temps d'intégration.

Pour déterminer la valeur $dT_i$ pour chaque pixel pendant une phase de calibration, on peut mesurer le signal issu du pixel pendant un temps d'intégration $T_0$ fixe pour tous les pixels, lorsque toute la matrice est éclairée par une luminance uniforme Lr, et calculer en fonction des réponses des pixels quel est le facteur correctif qu'il faut appliquer à chaque pixel. Ce facteur correctif peut être déterminé par exemple par rapport à la moyenne des signaux obtenus par l'ensemble des pixels éclairés par la luminance Lr, cette moyenne représentant l'équivalent d'un pixel de référence éclairé par la luminance Lr. De ce facteur correctif individuel, on tire $dT_i$ pour chaque pixel, et on stocke $dT_i$ dans le registre REG1 de ce pixel.

Cependant, il est possible aussi de considérer que la valeur de luminance de référence est la valeur moyenne reçue statistiquement par tous les pixels au bout d'un grand nombre d'images. On peut alors observer la valeur moyenne du signal issu de chaque pixel au bout d'un grand nombre de cycles d'intégration, et on en déduit le facteur de correction multiplicatif qu'il faut appliquer connaissant $K_0$.

Dans le cas où le facteur de correction multiplicatif est déterminé par un temps d'exposition $T_0-dT_i$ variable de pixel à pixel, on peut également déterminer $dT_i$ par une méthode récursive progressive, n'utilisant pas de mesure à l'aide d'un écran de luminance de référence.

Par "méthode numérique récursive", on entend une méthode de calcul d'une fonction $F_N(x_1, x_2, x_3, ...x_n.....X_N)$

de N variables $x_n$ de rang n variant de 1 à N, dans laquelle on part d'une valeur $F_n$ trouvée pour cette fonction en utilisant les n premières variables et on calcule la valeur $F_{n+1}$ pour n+1 variables par une fonction de $F_n$ et de la variable ajoutée $x_{n+1}$ :

$$F_{n+1} = R(F_n, x_{n+1}).$$

Une telle méthode aboutit progressivement au calcul de $F_N$ et n'est pas limitée par la valeur de N puisqu'elle peut continuer au fur et à mesure que N augmente. Ici, la fonction $F_n$ est le contenu du registre d'initialisation REG1 au $n^{ième}$ cycle d'intégration. La variable $x_n$ est la valeur de signal fourni au $n^{ième}$ cycle.

En pratique on procède de la manière suivante : à chaque image, on modifie le contenu actuel dT du registre pour lui rajouter une très petite fraction $X_i(L)/2^p$ du signal de sortie du pixel (le signal $X^*_i(L)$ est le signal après correction multiplicative, c'est donc le signal présent dans le registre REG2 dans l'architecture de la figure 5). Le signal $X_i(L)$ peut être positif (luminance supérieure à la moyenne pour un pixel de référence) ou négatif (luminance inférieure à la moyenne). On augmente donc un peu dT si le signal est positif et on le diminue un peu si le signal est négatif.

Très progressivement, avec une constante de temps d'autant plus grande que $2^p$ est un grand nombre, le contenu du registre REG1 se stabilisera à une valeur qui est différente pour chaque pixel mais qui est telle que tous les pixels fourniront un signal dont la moyenne est nulle sur une longue période.

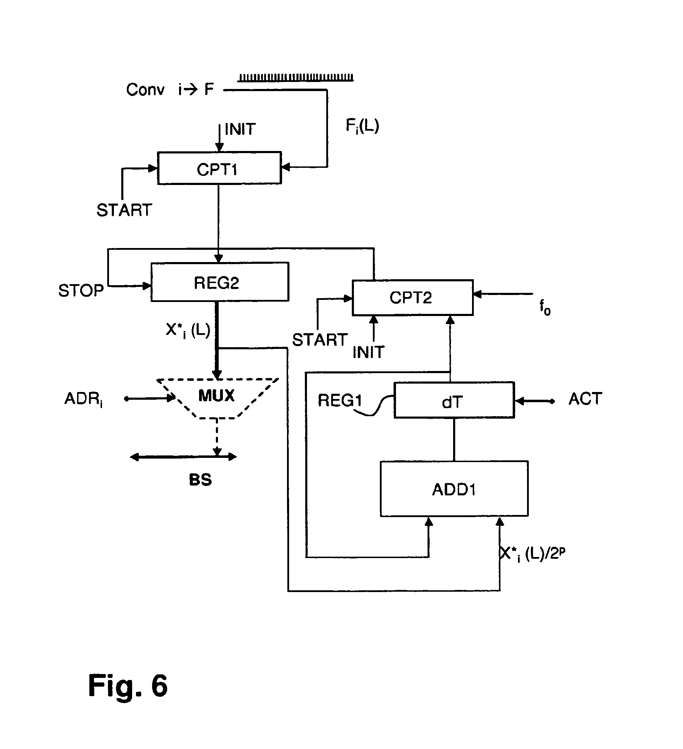

Ce principe d'élaboration progressive du contenu du registre REG1 peut être mis en oeuvre à l'aide d'une architecture telle que celle de la figure 6. Dans cette architecture il n'y a pas de phase de calibrage car le calibrage se fait automatiquement et progressivement au fur et à mesure que les pixels reçoivent statistiquement des éclairements très variables mais centrés autour d'une luminance moyenne identique pour tous.

Par rapport à la figure 5, le circuit de calcul de la figure 6 comporte en outre un additionneur ADD1 pour additionner après chaque cycle une valeur $X^*_i(L)/2^p$ au contenu actuel du registre. Un signal ACT définit l'instant de cette addition à la fin d'un cycle ou au début du cycle suivant. L'obtention d'une valeur $X^*_i(L)/2^p$ se fait en décalant à droite de p rangs les bits de la valeur numérique $X^*_i(L)$.

Dans ce qui précède on a considéré un exemple de correction multiplicative dans le cas d'un pixel dont le signal est issu d'un comptage d'impulsions à une fréquence d'autant plus élevée que l'éclairement est plus important.

On comprendra que l'invention est applicable également à d'autres cas et on a mentionné ci-dessus la possibilité de le faire en analogique avec une tension ou un courant de polarisation contrôlé individuellement pour chaque pixel dans une architecture ou la sensibilité du pixel est proportionnelle à ce courant ou cette tension de polarisation, ce qui est en général le cas dans des structures de détecteurs de type bolométriques.

## Revendications

1. Procédé de correction de sensibilité pour un capteur d'image matriciel du type dans lequel les courbes de réponse des différents pixels en fonction de la luminance L peuvent être representées par des droites passant toutes sensiblement par un même point d'abscisse $L_0$ et d'ordonnée $X(L_0) = K_0$, comprenant les étapes suivantes :

   - on établit pixel par pixel un signal $X_i(L)$ correspondant à l'éclairement d'un pixel $P_i$ par une luminance L ;
   - on définit ledit point $k_0$, la valeur $K_0$ étant choisie telle que pour une luminance $L_0$ donnée les pixels fournissent tous un signal $X_i(L_0)$ sensiblement égal à $K_0$ ;
   - et on établit un signal $X^*_i(L)$ corrigé en appliquant au signal $X_i(L)-K_0$ un coefficient correcteur multiplicatif spécifique au pixel considéré et en ajoutant $K_0$ au résultat de la multiplication, le coefficient correcteur étant déterminé à partir du signal $X_i(Lr)$ fourni par le pixel $P_i$ pour une luminance de référence déterminée Lr qui est la même pour tous les pixels.

2. Procédé selon la revendication 1, **caractérisé en ce que** le coefficient correcteur multiplicatif est égal à $[X_0(Lr) - K_0] / [X_i(Lr) - K_0]$, où $X_0(Lr)$ est une valeur désirée pour le signal corrigé issu d'un pixel lorsqu'il est éclairé par la luminance de référence Lr.

3. Procédé selon l'une des revendications 1 et 2, **caractérisé en ce que** le signal $X_i(L)$ est l'intégrale temporelle d'une valeur de courant électrique d'autant plus importante que la luminance est plus grande.

4. Procédé selon la revendication 3, **caractérisé en ce que** le coefficient correcteur multiplicatif spécifique à chaque pixel est appliqué sous forme d'une durée d'intégration du courant électrique différente d'un pixel à l'autre.

5. Procédé selon l'une des revendications 1 à 4, **caractérisé en ce que** le coefficient correcteur multiplicatif est calculé pour chaque pixel pendant une phase de calibrage au cours de laquelle les pixels sont illuminés par une source de lumière uniforme de luminance Lr.

6. Capteur matriciel utilisant une correction de sensibilité selon l'une des revendications 1 à 5, **caractérisé en ce que** chaque pixel comporte un élément sensible à la lumière fournissant un courant variable en fonction de l'éclairement, un élément de conversion courant-fréquence produisant des impulsions à une fréquence variable en fonction du courant, un compteur d'impulsions (CPT1) actionné pendant une durée d'intégration ($T_i$) spécifique au pixel, le capteur comportant des moyens pour définir pour chaque pixel une durée d'intégration variable respective à partir d'un signal fourni par le pixel pour une luminance de référence déterminée Lr qui est la même pour tous les pixels, le rapport entre cette durée d'intégration et une durée fixe $T_0$ représentant ledit coefficient correcteur multiplicatif.

7. Capteur matriciel selon la revendication 6, **caractérisé en ce que** la durée d'intégration variable spécifique à un pixel est définie à partir d'un registre (REG1) spécifique au pixel, le contenu de ce registre étant incrémenté d'une valeur $X^*_i(L) / 2^p$ à chaque cycle d'intégration, p étant un nombre entier au moins égal à 8 et de préférence choisi entre 12 et 14, la valeur corrigée $X^*_i(L)$ pouvant prendre des valeurs positives ou négatives autour d'une valeur nulle correspondant à la moyenne des luminances reçues par les pixels sur une longue période de temps.

8. Capteur matriciel selon l'une des revendications 6 et 7, pour de l'imagerie infrarouge de type bolométrique.

## Claims

1. A method of correcting sensitivity for a matrix image sensor of the kind where the response curves of the different pixels according to luminance may be represented by straight lines all passing approximately through a common point of abscissa $L_0$ and ordinate $X(L_0) = K_0$, comprising, **characterized in that** it comprises the following steps:

   - a signal $X_i(L)$ is established pixel by pixel that corresponds to the illumination of a pixel $P_i$ by a luminance L;
   - point $K_0$ is defined, the value $K_0$ being chosen such that, for a given luminance $L_0$ the pixels all supply a signal $X_i(L_0)$ substantially equal to $K_0$;
   - and a corrected signal $X^*_i(L)$ is established by applying to the signal $X_i(L)-K_0$ a multiplying correcting coefficient specific to the pixel concerned and by adding $K_0$ to the result of the multiplication, the correcting coefficient being determined from the signal $X_i(Lr)$ supplied by the pixel $P_i$ for a determined reference luminance Lr which is the same for all the pixels.

2. The method as claimed in claim 1, **characterized in that** the multiplying correcting coefficient is equal to $[X_0(Lr) - K_0] / [X_i(Lr) - K_0]$, in which $X_0(Lr)$ is a desired value for the corrected signal obtained from a pixel when it is illuminated by the reference luminance Lr.

3. The method as claimed in one of claims 1 and 2, **characterized in that** the signal $X_i(L)$ is the temporal integral of an electrical current value that becomes all the greater as the luminance increases.

4. The method as claimed in claim 3, **characterized in that** the multiplying correcting coefficient specific to each pixel is applied in the form of an electrical current integration time that differs from one pixel to another.

5. The method as claimed in one of claims 1 to 4, **characterized in that** the multiplying correcting coefficient is calculated for each pixel during a calibration phase during which the pixels are illuminated by a uniform light source of luminance Lr.

6. A matrix sensor that uses a sensitivity correction as claimed in one of claims 1 to 5, **characterized in that** each pixel comprises a light-sensitive element supplying a current that varies according to the illumination, a current-frequency conversion element producing pulses with a frequency that varies according to the current, a pulse counter (CPT1) actuated during an integration time ($T_i$) specific for the pixel, the sensor comprising means for defining for each pixel a respective variable integration time from a signal provided by the pixel for a given reference luminance $L_r$ which is the same for all pixels, the ratio between said integration time and a fixed duration $T_0$ being representative of said multiplying correcting coefficient.

**7.** The matrix sensor as claimed in claim 6, **characterized in that** the variable integration time specific to a pixel is defined from a register (REG1) specific to the pixel, the content of this register being incremented by a value $X^*_i(L)$ / $2^p$ on each integration cycle, p being an integer number at least equal to 8 and preferably chosen between 12 and 14, the corrected value $X^*_i(L)$ being able to assume positive or negative values around a zero value corresponding to the average of the luminances received by the pixels over a long time period.

**8.** The matrix sensor as claimed in one of claims 6 and 7, for bolometric-type infrared imaging.

**Patentansprüche**

**1.** Verfahren zur Empfindlichkeitskorrektur für einen Matrixbildsensor des Typs, bei dem die Antwortkurven der verschiedenen Pixel in Abhängigkeit von der Lichtstärke L von Geraden dargestellt sein können, die alle etwa durch denselben Punkt der Abszisse $L_0$ und der Ordinate $X(L_0) = K_0$ verlaufen, das die folgenden Schritte umfasst:

- Errichten Pixel für Pixel eines Signals $X_i(L)$, das der Beleuchtungsstärke eines Pixels $P_i$ durch eine Lichtstärke L entspricht,
- Bestimmen des Punkts $K_0$, wobei der Wert $K_0$ derart ausgewählt ist, dass die Pixel für eine gegebene Lichtstärke $L_0$ alle ein Signal $X_i(L_0)$ etwa gleich $K_0$ liefern,
- und Errichten eines korrigierten Signals $X^*_i(L)$ durch Anwenden eines für das betreffende Pixel speziellen Multiplikations-Korrekturkoeffizienten auf das Signal $X_i(L)-K_0$ und durch Hinzufügen von $K_0$ zum Ergebnis der Multiplikation, wobei der Korrekturkoeffizient ausgehend vom Signal $X_i(Lr)$ bestimmt wird, das vom Pixel $P_i$ für eine bestimmte Referenzlichtstärke Lr geliefert wird, die für alle Pixel dieselbe ist.

**2.** Verfahren nach Anspruch 1, **dadurch gekennzeichnet, dass** der Multiplikations-Korrekturkoeffizient gleich $[X_0(Lr) - K_0]$ / $[X_i(Lr) - K_0]$ ist, wobei $X_0(Lr)$ ein gewünschter Wert für das korrigierte Signal, ausgegeben von einem Pixel, ist wenn es von der Referenzlichtstärke Lr beleuchtet wird.

**3.** Verfahren nach einem der Ansprüche 1 und 2, **dadurch gekennzeichnet, dass** das Signal $X_i(L)$ das Zeitintegral eines elektrischen Stromwerts ist, das umso größer ist, je mehr die Lichtstärke zunimmt.

**4.** Verfahren nach Anspruch 3, **dadurch gekennzeichnet, dass** der für jedes Pixel spezielle Multiplikations-Korrekturkoeffizient in Form einer Integrationsdauer des elektrischen Stroms angewendet wird, die von einem Pixel zum anderen unterschiedlich ist.

**5.** Verfahren nach einem der Ansprüche 1 bis 4, **dadurch gekennzeichnet, dass** der Multiplikations-Korrekturkoeffizient für jedes Pixel während einer Eichphase berechnet wird, während der die Pixel von einer gleichmäßigen Lichtquelle mit der Lichtstärke Lr beleuchtet werden.

**6.** Matrixsensor, der eine Empfindlichkeitskorrektur nach einem der Ansprüche 1 bis 5 verwendet, **dadurch gekennzeichnet, dass** jedes Pixel ein lichtempfindliches Element aufweist, das einen in Abhängigkeit von der Beleuchtungsstärke variablen Strom liefert, wobei ein Umwandlungselement Strom-Frequenz Impulse in einer vom Strom abhängigen variablen Frequenz produziert, einen Impulszähler (CPT1), der während einer pixelspezifischen Integrationsdauer ($T_i$) betätig wird, wobei der Sensor Mittel aufweist, um für jedes Pixel, ausgehend von einem von dem Pixel für eine bestimmte Referenzlichtstärke Lr gelieferten Signal, die für alle Pixel dieselbe ist, eine jeweilige variable Integrationsdauer zu bestimmen, wobei das Verhältnis zwischen dieser Integrationsdauer und einer feststehenden Dauer $T_0$ den Multiplikations-Korrekturkoeffizient repräsentiert.

**7.** Matrixsensor nach Anspruch 6, **dadurch gekennzeichnet, dass** die variable pixelspezifische Integrationsdauer ausgehend von einem pixelspezifischen Register (REG1) bestimmt wird, wobei der Inhalt dieses Registers von einem Wert $X^*_i(L)$ / $2^p$ während jedes Integrationszyklus inkrementiert wird, wobei p eine ganze Zahl von mindestens gleich 8 ist und vorzugsweise zwischen 12 und 14 ausgewählt ist, wobei der korrigierte Wert la $X^*_i(L)$ positive oder negative Werte um einen Wert Null annehmen kann, der dem Mittelwert der von den Pixeln über eine lange Zeitdauer empfangenen Lichtstärken entspricht.

**8.** Matrixsensor nach einem der Ansprüche 6 und 7 für die Infrarot-Bilddarstellung vom Typ Bolometrie.

**Fig. 1**

Luminances utiles

**Fig. 2**

Fig. 3

Fig. 4

Fig. 5

**Fig. 6**

**EP 2 177 020 B1**

## RÉFÉRENCES CITÉES DANS LA DESCRIPTION

**Documents brevets cités dans la description**

- US 5047861 A

- GB 2296147 A